# EUROPEAN PATENT APPLICATION

(11) **EP 0 579 506 A1**
(43) Date of publication of application: **19.01.1994**
(21) Application number: 93305599.8
(22) Date of filing: 16.07.1993
(51) Int. Cl.: G02B 27/00

(54) **Helmet-mounted biocular display system**

(30) Priority: 17.07.1992 US 916042
(71) Applicant: KAISER AEROSPACE & ELECTRONICS CORPORATION, Foster City, California 94404 (US)
(72) Inventor: Bryars, Brett J., Pleasanton, California 94566 (US)
(74) Representative: Jones, Ian

(57) **Abstract**

An optical system for a biocular helmet-mounted display includes means for producing an image to be viewed by a user, a lens group that receives and collimate the image, a partially reflective, partially transmissive beam-splitter that projects the collimated image onto first and second image paths that each includes a focusing lens group to focus the image on a corresponding combiner eyepiece. The focusing lens group for each image path is constructed to have a focal length that matches the focal plane at which the corresponding combiner eyepiece is located, forming together an afocal lens combination that collimates light for the user. Thereby, the focal lengths for the image paths are made equal to one another, although the actual path lengths may be unequal. The focusing lens group and combiner eyepiece of the second image path is mounted so that they can be moved as a unit to adjust the distance between the combiner eyepieces to conform the interpupillar distance of the user.

## Description

The present invention relates generally to helmet-mounted biocular display systems. Such display systems can be used to project an image into the field of view of a user.

A variety of display systems are presently available for presenting flight information to members of the crew of an aircraft (e.g., pilot). For example, in addition to the long-used standby of mechanical or electro-mechanical instrumentation, flight information has also been presented for viewing via such information-conveyings systems using raster scan displays, or displays (termed "heads-up display" or HUD) that project flight information into a pilot's field of view to provide the pilot with views of the projected flight information superimposed the horizon (see, e.g., U.S. Patent Nos. 4,697,879 and 4,613,200). Typically, a HUD system includes an image generating element and an optics arrangement that receives the generated image to convey it to a combiner. The image is then displayed in a fashion that overlays the forward field-of-view of the user. Such display systems are not limited to the display of flight information. They may also, and sometimes are, used in simulators for training purposes, in which simulated forward views with over-laying simulated flight information is presented to the user.

Recent advances in such display systems and optics configurations have extended the HUD concept to HUD-like display systems that are mounted in the helmet worn by the pilot (or other user, such as members of the flight crew). Examples of such helmet-mounted displays include U.S. Patent Nos. 4,968,123 and 4,902,116. Certain of these systems (e.g., U.S. Patent No. 4,902,116) use a single image generating unit and an optics arrangement that projects an image onto two image paths of a biocular arrangement, placing that image in the field of view of each eye, by an eyepiece, of the viewer.

One problem with these present helmet-mounted displays is that the optics used tends to be relatively heavy, locating the center of gravity of the helmet somewhat forward of the forehead of the user. This problem results from the fact that in order to make the focal lengths for each image path substantially equal, the actual path lengths are made equal through the use of complex folding schemes. The optics necessary to implement these schemes tends to be heavier than desired. For example, in order to split the image into the two separate monocular paths for each of the eyepieces, such optic apparatus as an x-prism may be used, an optics element that tends to be bulky and relatively heavy. Thus, using bulky, heavy optics elements will tend to move the center of gravity of the helmet forward of the user's forehead region, making the helmet uncomfortable, particularly when worn for a period of time.

In addition, since the path lengths are equal in order to maintain equal focal lengths, interpupillar adjustment for different users is also difficult, if not impossible. Thus, the optics and helmet usually must be custom made with a specified interpupillar distance for the eyepieces that matches the specific user. Other users with different interpupillar distances must have their helmets structured specifically for them.

The present invention provides a helmet-mounted biocular display system that is inexpensive to construct from a low count of optics elements, providing low weight, and allowing the center of gravity to be located in a position more comfortable to the user. In addition, the optics of the system provides interpupillar distance adjustment without complex mechanisms.

Broadly, the invention comprises an image source, including a collimating lens arrangement, that communicates an image, in collimated form, to a beam-splitting element that projects the image onto first and second image paths to combiner eyepieces. Each of the first and second image paths includes a focusing lens group that functions to receive the collimated image and to focus the image on a corresponding combiner eyepiece. Each afocal lens group is constructed to have focal lengths that correspond to the focal lengths of the combiner eyepieces. Thus, in combination, the focusing lens group and combiner eyepiece of each path form an afocal lens arrangement that provides equal focal lengths for each of the image paths that is independent of the actual path lengths travelled by the projected image.

In the preferred embodiment, the focusing lens group of the second image path is mounted in fixed relation to the combiner eyepiece of that path so that movement of the focusing lens group and combiner eyepiece combination can be effected to provide interpupillar distance adjustment without modifying the focal length of that image path. This feature of the invention is made possible by the fact that it is collimated light that is received by each focusing lens group of each image path from the beam-splitting element. Thus, changing the distance between the focusing group of the second image path will not change the focal length and, therefore, the focus or resolution of the image as seen by the user on the combiner eyepiece of the second image path.

A number of advantages are achieved by the present invention. By providing lens apparatus having focal lengths corresponding to that of the eyepieces, an optics system having less and lighter components can be constructed, forming a lighter biocular system. When used in helmet mounted systems, the center of gravity of the helmet can then be positioned so that the helmet and system is much more comfortable to wear - and for longer periods of time.

In addition, as indicated above, since the two focusing lens groups receive collimated light from the beam-splitting element, the linear distance between one of the focusing lens groups (e.g., that in the second image path) and the beam-splitting element can be changed, permitting quick and easy interpupillar distance adjustment to match that of the user - without a resultant change in focus of the image seen by the user.

The present invention will become apparent to those skilled in the art from the following detailed description of an illustrative embodiment of the invention and from the accompanying drawings, in which:
Fig. 1 is schematic representation of the biocular display of the present invention; and
Figs. 2 and 3 are side and front views, respectively, in schematic form, of the biocular display of the present invention shown in combination with a helmet/visor arrangement as worn by a user.

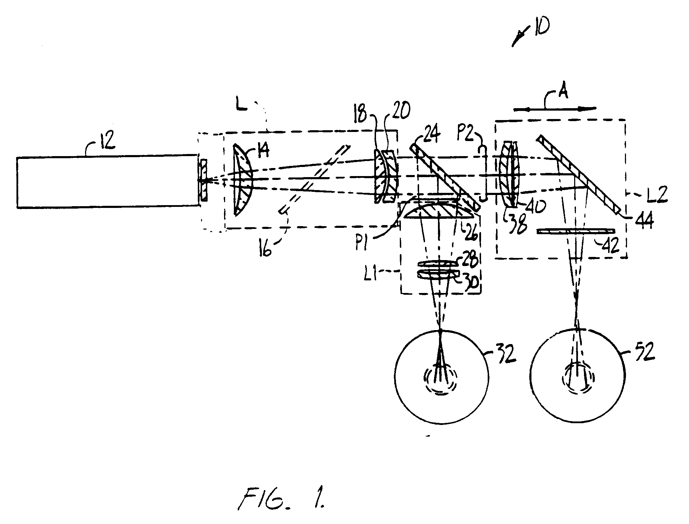

Turning now to the figures, and in particular Fig. 1, there is illustrated the optical system, generally designated with a reference numeral 10, that forms the biocular system of the present invention. As illustrated, the optical system 10 includes an image generating source 12 that provides image data to a collimating lens group L, comprising lens elements 14, 18 and 20. The lens elements 14,18 and 20 operate to collimate the image data received from the source 12, communicating the collimated image data onto a beam-splitting or light-transmissive/light-reflective element 24.

In the preferred embodiment of the invention the lens elements 14, 18 and 20 form a petzfal lens group to collimate the image data. However, it will be evident to those skilled in this art that the collimating lens group L need not be a petzfal lens, but can be any lens combination capable of collimating imagery.

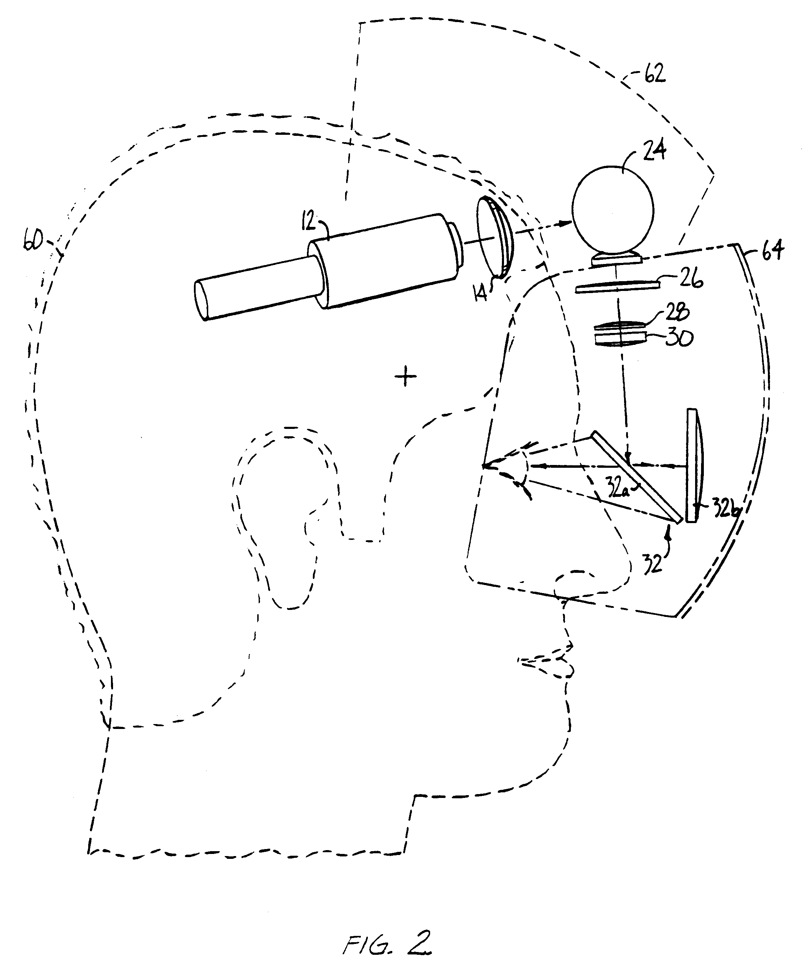

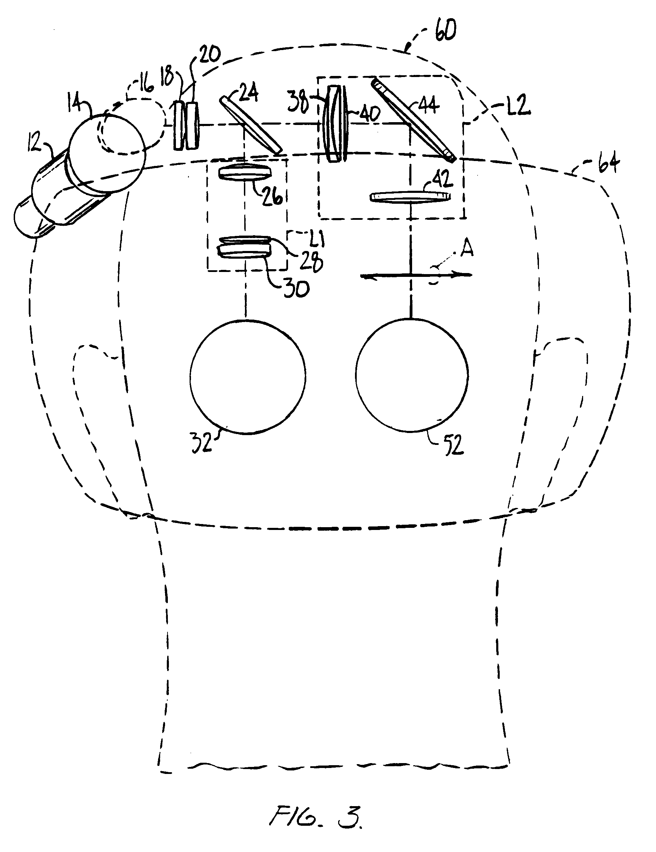

Continuing, the beam-splitting element 24 operates to project the collimated image data onto two image paths, P1 and P2. As Fig. 1 illustrates, the image path P1 includes a focusing lens group L1, comprising lens elements 26, 28, and 30, that operates to focus the image data on a first eyepiece 32 which, in turn, reflects the image data to an eye of a user 60 (Figs 2 and 3). The eyepiece 32 is constructed to have a focal plane that corresponds to the focal length of the lens group L1, forming with the lens group L1 an afocal lens combination.

The second image path P2, as Fig. 1 shows, includes a second focusing lens group L2 that comprises lens elements 38, 40 and 42, and a reflective element 44, that operates to focus the image data and project it onto a second eyepiece 52. The lens group L2 has a focal length typically different from that of the lens group L1. The eyepiece 52 is constructed to have a focal plane that corresponds to the focal length of the afocal relay lens group L2, and together they (i.e., lens group L2 and eyepiece 52) form an afocal lens combination.

The eyepieces 32, 52 are preferably structured to be mounted so that they can be moved into and out of the field of view of the user 60 (Figs. 2-3). Thus, the optical system 10 in constructed to mount to a helmet 62 in conventional fashion with the eyepieces mounted to a strut mechanism (not shown) that is, in turn, swivably attached to the housing (not shown) used to hold the optics system 10 so that the eyepieces 32, 52 can be moved into an out of the user's field of view. Preferably, a visor 64 is also pivotably mounted to the helmet 62 so that it can also be moved into and out of the user's field of view -- independent of eyepieces 32, 52. Thus, the visor 64 may be used with or without the eyepieces 32, 52, and likewise the eyepieces 32, 52 can be used with or without the visor 64.

The eyepieces 32, 52 themselves are also of generally conventional construction. Each is provided a focal plane that matches the focal lengths of the focusing lens groups L1, L2 with which each is associated. In particular, the eyepieces 32, 52 are of the combiner type, being transmissive so that the user can view a forward scene through each eyepiece 32, 52, but also reflective so that the image data projected thereon by the focusing lens groups L1, L2, can be reflected back to the user, superimposed upon the forward scene viewed through the eyepieces. One such eyepiece structure is disclosed in U.S. Patent No. 4,902,116, hereinbefore cited, which is incorporated by reference herein. However, those skilled in this art will readily realize that other combiner constructions may also be used to form the eyepieces 32, 52.

As will be now evident to those skilled in the art, the actual paths travelled by the image data from the image source 12 to the eyepieces 32, 52 are not equal. However, the lens groups L1, L2 and the corresponding eyepieces 32, 52 are structured to provide focal lengths that focus the image data for viewing at each eyepiece without regard to the path length. Since the focusing lens group L2 receives collimated image data, changing the distance between the beam-splitting element 24 and the focusing lens group will change the path length without changing the focus of the image on the eyepiece 52. Thus, the lens elements 38, 40 and 42 that form the lens group L2, together with the reflective unit 44, are preferable movably mounted in fixed relation to one another and to the eyepiece 52 so that they can be moved in a transverse direction (as indicated in Figs. 1 and 3 by the two-headed arrow A) relative to the remaining elements of the optical system 10. The eyepiece 52, thereby, can be moved relative to the eyepiece 32 to provide interpupillar distance adjustment without varying the focal point of image path P2.

Figs. 2 and 3 respectively illustrate side and front views of the optics system 10, in schematic form, mounted to the helmet structure 62 and worn by the user 60. As explained above, the eyepieces 32, 52 are mounted by appropriate structure (e.g., struts, not shown) to allow them to be rotated between first and second positions to respectively place them in, and remove them from, the user's field of view.

Fig. 2 shows an exemplary construction for the eyepiece 32 as comprising (as does eyepiece 52 which, except for the different focal planes of each eyepiece, is of identical construction), in combination, a beam-splitter 32a and a partially reflective, partially transmissive, combiner element 32b. The focused image data from the focusing lens group L1 is projected onto the beam-splitter 32a, where it is reflected onto the combiner element 32b. The combiner, in turn, provides the user 60 with a view of the projected image data superimposed on the forward view (e.g., the horizon) seen by the user through the beam-splitter and combiner 32a, 32b combination.

In order to obtain the proper projection of the light path from the image source 12 to the beam-splitter element 24, a fold-mirror 16 (illustrated in phantom in Fig. 1) may be necessary to convey the image data within the petzfal lens group 15, between the lens element 14 and 18, 20. It will be evident that the inclusion and location of the fold-mirror 16 depends upon the mounting of the various elements of the optics system 10.

In conclusion, there has been disclosed an optics system for use in helmet-mounted display systems that can accommodate different image data paths for each eye of a viewer without seriously affecting the focus of the image data for each eye. This allows smaller, lighter optics elements to be used, permitting the center of gravity of the system to be located at a position more conducive to allowing the helmet and system to be worn for longer periods of time. In addition the independence of the actual path length from the focal length provides a means of interpupillar adjustment.

## Claims

1. A helmet-mounted biocular display system, comprising:
display means (12) for producing an image;
first lens means (L) for receiving and communicating the image in collimated form;
partial reflective, partial transmissive means (24) for receiving and communicating the collimated image onto a first image path and a second image path;
second lens means (L1) in the first image path for focusing and projecting the image onto a first combining means (32) having a first focal length resolution; and
third lens means (L2) in the second image path for focusing and projecting the image onto a second combining means (52) having a second focal length resolution, the first and second combining means operating to reflect the images from the second and third lens means, respectively, to first and second eye positions of a user for viewing;
wherein the first image path has a focal length substantially equal to the first focal length resolution of the first combining means, and the second image path has a focal length substantially equal to the second focal length resolution of the second combining means.

2. A system as claimed in claim 1 wherein the combination of the focal length of the first image path and first focal length resolution of the first combining means (32) is substantially equal to the combination of the focal length of the second image path and second focal length resolution of the second combining means (52).

3. A system as claimed in claim 1 wherein the combination of the second lens means (L1) and the first combining means (32), and the combination of the third lens means (L2) and the second combining means (52), are each afocal.

4. A biocular system for receiving an image from an image source means for projection of the image into the field of view of a user, the system comprising:
collimating lens means (L) for receiving the image from the image source means (12) and projecting the image in collimated form;
light splitting means (24) for receiving and projecting the collimated image onto first and second image paths;
a first afocal lens means (L1,32) in the first image path to focus the image at a first focal length; and
a second afocal lens means (L2,52) in the second image path to focus the image at a second focal length;
wherein the first afocal lens means includes a first eyepiece means (32) positioned in the field of view of one of the user's eyes to receive and reflect the image, the first eyepiece being constructed to have a focal length generally equal to that of the rest of the first afocal lens means; and
wherein the second afocal lens means includes a second eyepiece means (52) positioned in the field of view of one of the user's eyes to receive and reflect the image, the first eyepiece being constructed to have a focal length generally equal to that of the rest of the second afocal lens means.
